# FASCICULE DE BREVET EUROPEEN

(11) **EP 2 230 821 B1**
(45) Date de publication et mention de la délivrance du brevet: **27.04.2016**
(21) Numéro de dépôt: 10155716.3
(22) Date de dépôt: 08.03.2010
(51) Int. Cl.: H04L 29/12, H04L 12/24, H04L 29/06, H04L 29/08

(54) **Procédé de configuration d'une station connectée à un réseau de communication IP**
Verfahren zur Konfiguration einer an einem IP netzwerk angeschlossenen Station
Method for configuring a station connected to an IP communication network

(30) Priorité: 20.03.2009 FR 0951789
(43) Date de publication de la demande: 22.09.2010
(73) Titulaire: Schneider Electric Industries SAS, 92500 Rueil-Malmaison (FR)
(72) Inventeur: Bony, Bernard, 38320 Eybens (FR); Chiche, Thierry, 38330 Saint Ismier (FR)
(74) Mandataire: Dufresne, Thierry

(56) Documents cités:
- EP-A1- 1 646 203
- US-A1- 2004 111 494
- UPnP FORUM: "UPnP Device Architecture 1.1" UPnP FORUM 15 octobre 2008 (2008-10-15), XP002562314 Extrait de l'Internet: URL:http://www.upnp.org/specs/arch/UPnP-ar ch-DeviceArchitecture-v1.1.pdf [extrait le 2010-01-08]

## Description

La présente invention se rapporte à un procédé de configuration permettant de configurer simplement les paramètres IPv4 d'une station connectée à un réseau local de communication IP, à partir d'un équipement de configuration.

Dans le présent document, un réseau de communication IP correspond à un réseau qui supporte le protocole de communication IP (Internet Protocol). Un tel réseau de communication IP peut utiliser indifféremment différents types de supports physiques (Mediums) et différents protocoles d'accès au réseau (MAC - Media Access Control), comme par exemple un bus filaire ou une liaison point à point conformes au standard Ethernet (IEEE802.3), ou une liaison sans fil conforme au standard WIFI (Wireless Fidelity - IEEE802.11).

Le protocole IP est un protocole de communication qui correspond à la couche Réseau du modèle OSI (Open Systems Interconnexion) et qui fournit un service d'adressage unique pour l'ensemble des stations connectées à un réseau de communication IP. Le protocole IP est le protocole le plus couramment utilisé aujourd'hui dans les réseaux de communication de type Internet, Intranet ou Extranet, notamment en combinaison avec les protocoles TCP (Transmission Control Protocol) ou UDP (User Datagram Protocol).

Actuellement, la version la plus répandue du protocole IP est une version appelée communément protocole IPv4, dans lequel l'adresse conforme au protocole IPv4 (appelée adresse IPv4) d'une station connectée au réseau est codée sur quatre octets. Néanmoins, il s'est avéré que le nombre d'adresses disponibles dans le protocole IPv4 deviendra vite insuffisant à l'avenir, ce qui a entraîné la création d'une nouvelle version du protocole IP appelée communément protocole IPv6, dans lequel l'adresse conforme au protocole IPv6 (appelée adresse IPv6) d'une station est codée sur seize octets, procurant ainsi un champ d'adressage beaucoup plus vaste. Par ailleurs, dans le protocole IPv6, chaque station se configure automatiquement avec une adresse fixe et unique, appelée adresse de lien local, lui permettant de communiquer avec les autres stations connectées sur le même lien sans configuration préalable. Au contraire, dans le protocole IPv4, une station doit être configurée afin de recevoir une adresse IPv4 valide et cohérente avec l'identification du réseau local auquel la station est connectée. Un réseau de communication IP est dit local lorsque les appareils connectés sur ce réseau communiquent entre eux directement sans passer par des passerelles de communication ou des routeurs.

Le terme station se rapporte à tout appareil susceptible de se connecter et de communiquer sur un réseau de communication IP, en particulier dans le domaine des automatismes industriels, des automatismes du bâtiment et de la distribution électrique. Une station peut donc être notamment un automate programmable (PLC-programmable Logic Controller), un module d'automate programmable, un module d'Entrées/Sorties déportées (remote I/O module), un variateur de vitesse, une interface de dialogue Homme-Machine, un appareil de gestion et surveillance d'un réseau électrique.

Actuellement, il existe toujours un grand nombre de stations qui ne peuvent communiquer sur un réseau de communication IP qu'en utilisant le protocole IPv4. Ces stations possèdent une interface réseau comportant notamment une pile de communication IP (ou stack IP) compatible avec le protocole IPv4, appelée par la suite pile IPv4. Cette pile IPv4 ne permet de communiquer qu'avec d'autres stations compatibles avec le protocole IPv4.

Lorsqu'une station veut communiquer sur un réseau local de communication IP au moyen du protocole IPv4, il faut configurer les paramètres IPv4 de cette station pour les rendre compatibles avec le réseau IPv4 auquel la station est connectée. Ces paramètres se composent principalement de l'adresse IPv4 et du masque de sous-réseau IPv4. L'adresse IPv4 permet d'identifier la station au sein du réseau local IP et le masque de sous-réseau IPv4 permet, via une opération booléenne ET avec l'adresse IPv4, d'identifier le réseau local IP auquel la station est connectée. Ainsi, l'adresse de sous-réseau d'une station se définit d'une façon générale comme étant égale au résultat de l'opération booléenne ET (AND) entre l'adresse IPv4 de la station et le masque de sous-réseau IPv4 de la station.

Habituellement, la configuration des paramètres IPv4 d'une station est assignée et transmise automatiquement au démarrage par une infrastructure dédiée à la gestion du réseau, comme par exemple un serveur DHCP (Dynamic Host Configuration Protocol). Ceci permet alors à un utilisateur de connecter simplement une station sur un réseau local de communication IP, sans se soucier des détails de configuration des paramètres IPv4 de la station.

Cependant, tous les réseaux locaux de communication IP ne sont pas raccordés à un serveur DHCP, en particulier dans les applications d'automatismes liées à l'industrie ou au bâtiment. La configuration des paramètres IPv4 d'une station nécessite alors les compétences d'un administrateur réseau, lors de la connexion de la station. D1 propose un outil graphique de configuration de stations à double pile de protocoles qui n'utilise pas DHCP.

En effet, pour paramétrer manuellement une station à partir d'un équipement de configuration tel qu'un ordinateur PC, un administrateur doit tout d'abord connaître les paramètres IPv4 courants de la station, information qui est souvent difficilement accessible. Puis, pour établir la connexion entre la station et le PC, l'administrateur doit modifier les paramètres IPv4 de son ordinateur PC pour les rendre compatibles avec les paramètres IPv4 courants de la station. En particulier, il est connu que l'adresse de sous-réseau de la station doit être identique à l'adresse de sous-réseau de l'équipement de configuration, puisque sinon la station et l'équipement de configuration ne pourront pas communiquer directement ensemble sur le réseau local IP par le protocole IPv4, sans passer par un routeur.

Ensuite seulement, l'administrateur pourra communiquer avec la station et modifier manuellement les paramètres IPv4 de la station, de façon à ce que la station puisse communiquer sur le réseau de communication IP souhaité. Ces opérations sont complexes et nécessitent des compétences informatiques qui ne sont pas forcément disponibles sur le site d'installation de la station.

L'invention a donc pour but de remédier à ce problème de façon à simplifier le raccordement d'une station quelconque à un réseau de communication IPv4, lorsque ce réseau n'est pas connecté à une infrastructure dédiée à la gestion du réseau, comme par exemple un serveur DHCP. Grâce à l'invention, un utilisateur n'a pas besoin de connaître les paramètres IPv4 courants de la station qu'il veut connecter à un réseau de communication IP, et n'a pas besoin non plus de modifier les paramètres IPv4 de son PC pour les rendre compatibles avec les paramètres IPv4 courants de la station. La configuration d'une nouvelle station se connectant sur un réseau de communication IPv4 sera ainsi grandement facilitée.

Pour cela, l'invention décrit un procédé de configuration d'une station dotée d'une adresse de sous-réseau à l'aide d'un équipement de configuration (40) doté d'une adresse de sous-réseau qui est différente de l'adresse de sous-réseau de la station (10), la station étant destinée à communiquer sur un réseau local de communication IP en utilisant le protocole IPv4. Le procédé comporte une étape de découverte d'une première adresse IP de la station conforme au protocole IPv6, l'étape de découverte étant effectuée par l'équipement de configuration qui communique avec la station à l'aide de services WEB en utilisant le protocole IPv6. Le procédé comporte également une étape de paramétrage dans l'équipement de configuration d'une seconde adresse IP conforme au protocole IPv4 et une étape de transfert dans la station de la seconde adresse IP conforme au protocole IPv4, l'étape de transfert étant réalisée en utilisant le protocole IPv6.

Selon une caractéristique, les services WEB sont conformes à la spécification DPWS (Device Profile for WEB Services - voir http://specs.xmlsoap.org/ ws/2006/02/ devprof/), et comprennent notamment des services WEB du type WS-Discovery, WS-Transfer, WS-MetadataExchange.

Selon une autre caractéristique, l'étape de paramétrage comporte une étape de chargement dans l'équipement de configuration d'une page WEB de configuration mémorisée dans la station. Alternativement, l'étape de paramétrage comporte une étape d'appel dans l'équipement de configuration de services WEB applicatifs conformes à la spécification DPWS et exposés par la station.

Selon une autre caractéristique, l'équipement de configuration communique avec la station via le réseau local de communication IP. Alternativement, l'équipement de configuration communique avec la station via un autre réseau de communication IP de type liaison point-à-point.

L'invention décrit aussi une station destinée à communiquer sur un réseau local de communication IP via le protocole IPv4, comportant une première pile de communication conforme au protocole IPv6 et une seconde pile de communication conforme au protocole IPv4, et susceptible d'être configurée grâce à un tel procédé de configuration.

D'autres caractéristiques et avantages vont apparaître dans la description détaillée qui suit en se référant à un mode de réalisation donné à titre d'exemple et représenté par les dessins annexés sur lesquels :
- la figure 1 schématise une architecture simplifiée autour d'un réseau de communication local IP,
- la figure 2 montre une variante de l'architecture de la figure 1.

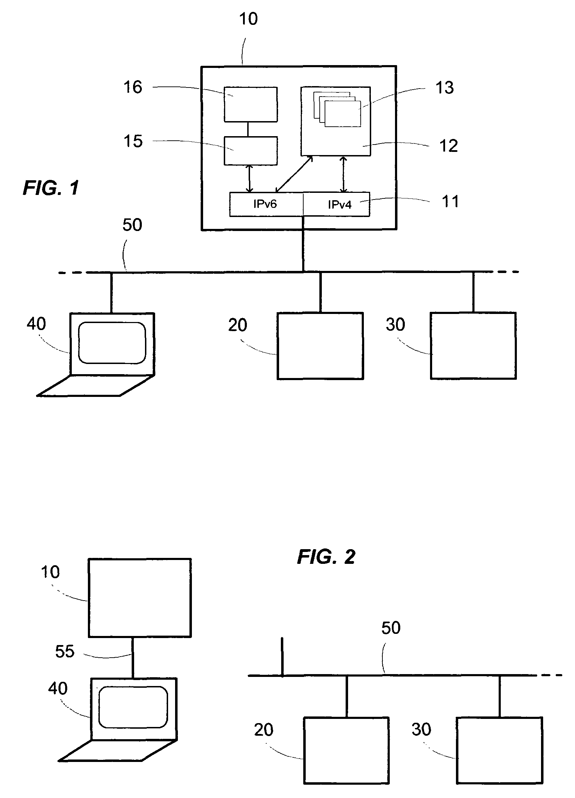

La figure 1 montre une première station 10, une seconde station 20 et une troisième station 30 qui sont connectées à un réseau local de communication IP 50. Le réseau local de communication IP 50 est un réseau supportant le protocole de communication IP et peut indifféremment être basé par exemple sur un bus filaire Ethernet ou une liaison sans fil WIFI.

La seconde station 20 comporte seulement une pile de communication IPv6 et n'est donc capable de communiquer sur le réseau local IP 50 que par le protocole IPv6. La troisième station 30 comporte seulement une pile de communication IPv4 et n'est donc capable de communiquer sur le réseau local IP 50 que par le protocole IPv4. Ces stations 20, 30 peuvent communiquer simultanément avec d'éventuels autres stations ou appareils sur le même réseau IP 50 en utilisant respectivement les protocoles IPv6, IPv4, mais elles ne peuvent pas communiquer entre elles.

La première station 10 possède une pile de communication IPv4 supportant le protocole IPv4, ainsi qu'une pile de communication IPv6 supportant le protocole IPv6. Ce double attachement aux protocoles IPv4 et IPv6 peut par exemple être réalisé dans une même pile 11, dite pile duale. La première station 10 possède également une pile 15 de communication par Services WEB compatible avec la spécification DPWS, et une application DPWS 16 contenant notamment le code de configuration de la pile DPWS 15.

De façon standard, dès le raccordement d'une station à un réseau IP, le protocole IPv6 prévoit une procédure d'auto-configuration d'une adresse IPv6 de lien local lui permettant de communiquer avec les autres stations supportant le protocole IPv6 et connectées au même réseau IP. Ainsi, dans l'exemple de la figure 1, la première station 10 connectée au réseau IP 50 et supportant le protocole IPv6 sera capable automatiquement de communiquer avec la seconde station 20.

Par contre, le protocole IPv4 ne prévoit pas une telle procédure. Ainsi, lors de la connexion de la première station 10 au réseau IP 50, les paramètres IPv4 de cette station 10 doivent être compatibles avec les paramètres du réseau local IP 50 pour pouvoir communiquer par exemple avec la troisième station 30, sans passer par un routeur. En particulier, l'adresse de sous-réseau de la station 10 doit être identique à l'adresse de sous-réseau de la troisième station 30. Si le réseau 50 n'est pas connecté à une infrastructure permettant une configuration automatique des paramètres IPv4 des stations connectées au réseau, comme par exemple un serveur DHCP, il faut donc effectuer manuellement la configuration des paramètres IPv4 de la première station 10.

L'invention propose donc une méthode permettant de configurer simplement les paramètres IPv4 de la première station 10 lorsqu'elle se connecte au réseau local IP 50.

Cette méthode de configuration est réalisée à l'aide d'un équipement de configuration 40, tel qu'un ordinateur PC, un téléphone mobile, un Smartphone, un PDA. L'équipement de configuration 40 est connecté à la première station 10 via un réseau local IP, qui est le réseau de communication local IP 50, selon une première variante représentée en figure 1. L'équipement de configuration 40 doit au moins comporter une pile de communication par Services WEB compatible avec la spécification DPWS et une pile de communication IPv6 supportant le protocole IPv6. Il n'est pas nécessaire que l'équipement de configuration 40 comporte également une pile de communication IPv4.

Comme la première station 10 et l'équipement de configuration 40 supportent tous les deux le protocole IPv6, ils sont donc capables de communiquer entre eux via ce protocole IPv6 dès qu'ils sont connectés entre eux par un réseau local IP. Par contre, la première station 10 n'est pas capable de communiquer avec la troisième station 30, qui ne supporte que le protocole IPv4, tant que les paramètres IPv4 de la première station 10 ne sont pas correctement configurés. En effet, l'adresse de sous-réseau de la station 10 est différente de l'adresse de sous-réseau de l'équipement de configuration 40.

L'invention comporte une première étape, appelée étape de découverte, dans laquelle l'équipement de configuration 40 envoie un message de découverte de type "Probe" à l'aide d'un service WEB conforme à la spécification "WS-Discovery", conforme au protocole application défini dans la spécification DPWS et fonctionnant au-dessus du protocole IPv6. Le message "Probe" est un message de diffusion restreinte (UDP multicast) qui permet de découvrir toutes les stations qui sont connectées au réseau local IP 50 via le protocole IPv6 et qui possèdent une pile de communication conforme à DPWS. Les stations communiquant avec l'équipement de configuration 40 par le protocole IPv6 répondent par un message "ProbeMatch" également conforme à la spécification "WS-Discovery". Ce message "ProbeMatch" contient notamment une référence à un service WEB ainsi que l'adresse IPv6. Ainsi, l'étape de découverte permet à l'équipement de configuration 40 de découvrir l'adresse IPv6 de la première station 10, appelée première adresse IP. Une fois cette première adresse IPv6 connue par l'équipement de configuration 40, celui-ci peut échanger des informations avec la première station 10 selon le protocole IPv6.

Durant l'étape de découverte, l'équipement de configuration 40 demande ensuite à la première station 10 de lui retourner un ensemble d'informations, dites métadonnées ou metadata. Cet échange d'informations se fait préférentiellement par une opération de type "Get" définie par les spécifications "WS-Transfer" et "WS-MetadataExchange" conforme au protocole application défini dans la spécification DPWS, toujours en utilisant le protocole de communication IPv6 entre la première station 10 et l'équipement de configuration 40. L'équipement de configuration 40 reçoit alors une réponse contenant différentes informations de configuration qui sont mémorisées dans l'application DPWS 16 de la première station 10, telles que le nom de la station, son type, ses propriétés, les services WEB qu'elle propose, etc.

L'étape de découverte peut être lancée à partir d'un logiciel dédié installé dans l'équipement de configuration 40 ou à partir d'un logiciel d'exploration réseau comme celui existant dans le système d'exploitation Windows Vista® de Microsoft Corporation.

Selon un premier mode de réalisation, la première station 10 renvoie également, en réponse à un message "Get", une adresse URL (IPv6) d'une page WEB 13 de configuration d'adresse. Cette page WEB 13 est mémorisée par exemple dans un serveur WEB 12 de la première station 10. Elle permettra à un opérateur de configurer une adresse IPv4 de la première station 10.

Selon un deuxième mode de réalisation, l'application DPWS 16 contient non seulement le code de configuration de la pile DPWS 15, mais contient également des Services WEB applicatifs dédiés à la gestion des paramètres IPv4 de la première station 10. En réponse à un message "Get", la première station 10 expose alors ces Services WEB applicatifs conformes à la spécification DPWS, ces Services WEB pouvant ensuite être exécutés à partir d'un programme application spécifique dans l'équipement de configuration 40.

L'invention comporte ensuite une deuxième étape, dite étape de paramétrage, permettant à un utilisateur de saisir des paramètres IPv4 de la première station 10 qui soient compatibles avec l'adresse du réseau local IP 50, de façon à ce que. Les paramètres IPv4 comprennent une seconde adresse IP qui est une adresse IPv4 de la première station 10 et un masque de sous-réseau conforme au protocole IPv4. La saisie se fait à partir d'un écran de saisie dans l'équipement de configuration 40.

Dans le premier mode de réalisation, l'étape de paramétrage utilise l'adresse URL (Uniform Resource Locator) mémorisée lors de l'étape de découverte pour charger dans l'équipement de configuration 40 la page WEB 13 de configuration IPv4 mémorisée dans la première station 10. Cette page WEB 13 doit permettre à un opérateur de saisir les paramètres IPv4 de la première station 10. L'affichage de cette page WEB 13 se fait dans un simple navigateur WEB via le protocole http, mais toujours en utilisant le protocole IPv6. La page WEB 13 du serveur WEB 12 doit donc être accessible sur le réseau local IP 50 à travers la pile IPv6 de la première station 10

Dans le second mode de réalisation, la saisie se fait à partir d'une Interface Homme-Machine du programme application spécifique, communiquant avec la première station 10 au travers de WEB services applicatifs conformes à la spécification DPWS et exposés par la station 10. L'étape de paramétrage comporte ainsi une étape d'appel d'un service WEB applicatif 16, de type "GetIPConfiguration", qui permet de rapatrier et d'afficher sur un écran de configuration de l'équipement 40, les paramètres courants IPv4 de la première station 10.

Dans le second mode de réalisation, la saisie se fait à partir d'une Interface Homme-Machine du programme application spécifique, communiquant avec la première station 10 au travers de WEB services applicatifs conformes à la spécification DPWS exposés par la station 10 et fonctionnant également sur IPv6. L'étape de paramétrage comporte ainsi une étape d'appel d'un service WEB applicatif 16, de type "GetIPConfiguration", qui permet de rapatrier et d'afficher sur un écran de configuration de l'équipement 40, les paramètres courants IPv4 de la première station 10. Il est possible que dans certains cas, les nouveaux paramètres IPv4 à transférer dans la station 10 soient déjà connus du programme application spécifique, sans qu'aucune saisie d'un utilisateur ne soit nécessaire.

Enfin l'invention comporte une troisième étape, dite étape de transfert, permettant de charger dans la première station 10 les paramètres IPv4 saisis durant l'étape de paramétrage. La première station 10 possède alors les paramètres IPv4 (adresse IPv4 et masque de sous-réseau) qui lui seront nécessaires pour communiquer selon le protocole IPv4 sur le réseau local IP 50, par exemple avec la troisième station 30.

Dans le premier mode de réalisation, différents protocoles de communication peuvent être utilisés pour le chargement des paramètres IPv4, en fonction des technologies utilisées par la page WEB 13. Ces protocoles doivent par contre s'appuyer sur le protocole IPv6.

Dans le deuxième mode de réalisation, le programme application spécifique transfère les paramètres IPv4 grâce aux WEB services applicatifs conformes à la spécification DPWS exposés par la première station 10 et fonctionnant également sur IPv6. Par exemple, l'étape de transfert comporte un appel à un service WEB applicatif de type "SetIPConfiguration" qui permet d'envoyer les nouveaux paramètres IPv4 à la première station 10.

Dans une seconde variante schématisée en figure 2, la première station 10 est d'abord reliée avec l'équipement de configuration 40 via un autre réseau de communication IP 55, appelé réseau auxiliaire, qui est par exemple une liaison point-à-point ou une liaison WIFI, alors qu'elle n'est pas encore forcément raccordée au réseau de communication local IP 50. Le procédé décrit dans l'invention permet alors d'effectuer les étapes de découverte, de paramétrage et de transfert entre la première station 10 et l'équipement de configuration 40 via ce réseau local de communication IP auxiliaire 55. Les paramètres IPv4 qui sont chargés dans la première station 10 sont des paramètres qui permettront ensuite à la station 10 de pouvoir communiquer sur le réseau local IP 50. Une fois paramétrée, la station 10 est ensuite raccordée au réseau de communication local IP 50.

Cette variante permet avantageusement à un opérateur de pouvoir configurer la première station 10 sur un site de préparation préalable, alors que la première station 10 n'est pas encore installée sur son site final d'utilisation. Lorsqu'elle est ensuite installée sur site et raccordée au réseau de communication local IP 50, la station 10 comporte directement les bons paramètres IP lui permettant de pouvoir communiquer sur ce réseau IP 50 à la fois via les protocoles IPv4 et IPv6, sans aucune intervention de l'opérateur.

Ainsi, l'invention facilite l'accès de la première station 10 à une communication selon le protocole IPv4 sur le réseau local de communication IP 50. La station 10 comporte une première pile de communication conforme au protocole IPv6 et une seconde pile de communication conforme au protocole IPv4. L'équipement de configuration 40, relié à la station 10 au moyen du réseau local 50 ou d'un autre réseau auxiliaire 55, peut se connecter automatiquement avec la station selon le protocole IPv6. On peut alors, à partir de l'équipement de configuration 40, paramétrer puis transférer les paramètres IPv4 de la station, toujours en utilisant le protocole IPv6. La station est ensuite opérationnelle pour communiquer avec certaines stations sur le réseau local de communication IP 50 via le protocole IPv4, ainsi qu'avec d'autres stations via le protocole IPv6.

## Revendications

1. Procédé de configuration d'une station (10) dotée d'une adresse de sous-réseau à l'aide d'un équipement de configuration (40) doté d'une adresse de sous-réseau qui est différente de l'adresse de sous-réseau de la station (10), la station (10) étant destinée à communiquer sur un réseau local de communication IP (50) en utilisant le protocole IPv4, le procédé comportant :
- une étape de découverte d'une première adresse IP de la station (10) conforme au protocole IPv6, l'étape de découverte étant effectuée par l'équipement de configuration (40) qui communique avec la station (10) à l'aide de services WEB en utilisant le protocole IPv6,
- une étape de paramétrage dans l'équipement de configuration (40) d'une seconde adresse IP conforme au protocole IPv4,
- une étape de transfert dans la station (10) de la seconde adresse IP conforme au protocole IPv4, l'étape de transfert étant réalisée en utilisant le protocole IPv6.

2. Procédé de configuration selon la revendication 1, **caractérisé en ce que** les services WEB sont conformes à la spécification DPWS.

3. Procédé de configuration selon la revendication 1, **caractérisé en ce que** l'étape de paramétrage comporte une étape de chargement dans l'équipement de configuration (40) d'une page WEB de configuration (13) mémorisée dans la station (10).

4. Procédé de configuration selon la revendication 1, **caractérisé en ce que** l'étape de paramétrage comporte une étape d'appel dans l'équipement de configuration (40) de services WEB applicatifs (16) conformes à la spécification DPWS et exposés par la station (10).

5. Procédé de configuration selon la revendication 3 ou 4, **caractérisé en ce que** l'étape de paramétrage comporte une étape de saisie par un utilisateur de la seconde adresse IP conforme au protocole IPv4.

6. Procédé de configuration selon la revendication 5, **caractérisé en ce que** l'étape de paramétrage comporte également une étape de saisie d'un masque de sous-réseau conforme au protocole IPv4.

7. Procédé de configuration selon la revendication 1, **caractérisé en ce que** le réseau local de communication IP (50) est un réseau Ethernet.

8. Procédé de configuration selon la revendication 1, **caractérisé en ce que** le réseau local de communication IP (50) est un réseau de communication sans fil.

9. Procédé de configuration selon la revendication 1, **caractérisé en ce que** l'équipement de configuration (40) communique avec la station (10) via le réseau local de communication IP (50).

10. Procédé de configuration selon la revendication 1, **caractérisé en ce que** l'équipement de configuration (40) communique avec la station (10) via un réseau de communication IP auxiliaire (55) de type liaison point-à-point.

11. Station destinée à communiquer sur un réseau local de communication IP en utilisant le protocole IPv4, **caractérisée en ce que** la station (10) comporte une première pile de communication conforme au protocole IPv6 et une seconde pile de communication conforme au protocole IPv4, et **en ce que** la station est configurée grâce à un procédé de configuration selon l'une des revendications précédentes.

## Patentansprüche

1. Verfahren zur Konfiguration einer Station (10), die mit einer Adresse eines Unternetzwerks versehen ist, mit Hilfe einer Konfigurationsausrüstung (40), die mit einer Adresse eines Unternetzwerks versehen ist, die sich von der Adresse des Unternetzwerks der Station (10) unterscheidet, wobei die Station (10) dazu bestimmt ist, mit einem lokalen IP-Kommunikationsnetz (50) zu kommunizieren, wobei das Protokoll IPv4 verwendet wird, wobei das Verfahren umfasst:
- einen Schritt des Entdeckens einer ersten IP-Adresse der Station (10) gemäß dem Protokoll IPv6, wobei der Schritt des Entdeckens von der Konfigurationsausrüstung (40) durchgeführt wird, die mit der Station (10) mit Hilfe von WEB-Diensten unter Verwendung des Protokolls IPv6 kommuniziert,
- einen Schritt der Parametrierung einer zweiten IP-Adresse nach dem Protokoll IPv4 in der Konfigurationsausrüstung (40),
- einen Schritt des Transfers der zweiten IP-Adresse gemäß dem Protokoll IPv4 in die Station (10), wobei der Transferschritt unter Verwendung des Protokolls IPv6 durchgeführt wird.

2. Konfigurationsverfahren nach Anspruch 1, **dadurch gekennzeichnet, dass** die WEB-Dienste mit der Spezifikation DPWS konform sind.

3. Konfigurationsverfahren nach Anspruch 1, **dadurch gekennzeichnet, dass** der Schritt der Parametrierung einen Schritt des Ladens einer WEB-Konfigurationsseite (13), die in der Station (10) gespeichert ist, in die Konfigurationsausrüstung (40) umfasst.

4. Konfigurationsverfahren nach Anspruch 1, **dadurch gekennzeichnet, dass** der Schritt der Parametrierung einen Schritt des Aufrufens von WEB-Anwendungsdiensten (16) gemäß der Spezifikation DPWS, die von der Station (10) dargeboten werden, in der Konfigurationsausrüstung (40) umfasst.

5. Konfigurationsverfahren nach Anspruch 3 oder 4, **dadurch gekennzeichnet, dass** der Schritt der Parametrierung einen Schritt der Erfassung der zweiten IP-Adresse gemäß dem Protokoll IPv4 durch einen Benutzer umfasst.

6. Konfigurationsverfahren nach Anspruch 5, **dadurch gekennzeichnet, dass** der Schritt der Parametrierung auch einen Schritt der Erfassung einer Maske eines Unternetzwerks gemäß dem Protokoll IPv4 umfasst.

7. Konfigurationsverfahren nach Anspruch 1, **dadurch gekennzeichnet, dass** das lokale IP-Kommunikationsnetz (50) ein Ethernet-Netz ist.

8. Konfigurationsverfahren nach Anspruch 1, **dadurch gekennzeichnet, dass** das lokale IP-Kommunikationsnetz (50) ein drahtloses Kommunikationsnetz ist.

9. Konfigurationsverfahren nach Anspruch 1, **dadurch gekennzeichnet, dass** die Konfigurationsausrüstung (40) mit der Station (10) über das lokale IP-Kommunikationsnetz (50) kommuniziert.

10. Konfigurationsverfahren nach Anspruch 1, **dadurch gekennzeichnet, dass** die Konfigurationsausrüstung (40) mit der Station (10) über ein Hilfs-IP-Kommunikationsnetz (55) vom Typ Punkt-zu-Punkt-Verbindung kommuniziert.

11. Station, die dazu bestimmt ist, auf einem lokalen IP-Kommunikationsnetzwerk unter Verwendung des Protokolls IPv4 zu kommunizieren, **dadurch gekennzeichnet, dass** die Station (10) einen ersten Kommunikations-Stack gemäß dem Protokoll IPv6 und einen zweiten Kommunikations-Stack gemäß dem Protokoll IPv4 umfasst, und dass die Station mit Hilfe eines Konfigurationsverfahrens nach einem der vorhergehenden Ansprüche konfiguriert wird.

## Claims

1. Method for configuring a station (10) provided with a subnetwork address using a configuration device (40) provided with a subnetwork address which is different from the subnetwork address of the station (10), the station (10) being intended to communicate over an IP communication local area network (50) by using the IPv4 protocol, the method comprising:
- a step of discovery of a first IP address of the station (10) conforming to the IPv6 protocol, the discovery step being performed by the configuration device (40) which communicates with the station (10) using web services by using the IPv6 protocol,
- a step of parameterizing, in the configuration device (40), of a second IP address conforming to the IPv4 protocol,
- a step of transfer, in the station (10), of the second IP address conforming to the IPv4 protocol, the transfer step being formed by using the IPv6 protocol.

2. Configuration method according to Claim 1, **characterized in that** the web services conform to the DPWS specification.

3. Configuration method according to Claim 1, **characterized in that** the parameterizing step comprises a step of loading, in the configuration device (40), of a configuration web page (13) stored in the station (10).

4. Configuration method according to Claim 1, **characterized in that** the parameterizing step comprises a step of calling, in the configuration device (40), application web services (16) conforming to the DPWS specification and displayed by the station (10).

5. Configuration method according to Claim 3 or 4, **characterized in that** the parameterizing step comprises a step of input, by the user, of the second IP address conforming to the IPv4 protocol.

6. Configuration method according to Claim 5, **characterized in that** the parameterizing step also comprises a step of input of a subnetwork mask conforming to the IPv4 protocol.

7. Configuration method according to Claim 1, **characterized in that** the IP communication local area network (50) is an Ethernet network.

8. Configuration method according to Claim 1, **characterized in that** the IP communication local area network (50) is a wireless communication network.

9. Configuration method according to Claim 1, **characterized in that** the configuration device (40) communicates with the station (10) via the IP communication local area network (50).

10. Configuration method according to Claim 1, **characterized in that** the configuration device (40) communicates with the station (10) via an auxiliary IP communication network (55) of point-to-point link type.

11. Station intended to communicate over an IP communication local area network by using the IPv4 protocol, **characterized in that** the station (10) comprises a first communication stack conforming to the IPv6 protocol and a second communication stack conforming to the IPv4 protocol, and **in that** the station is configured using a configuration method according to one of the preceding claims.
